# EUROPEAN PATENT SPECIFICATION

(11) **EP 2 411 229 B1**
(45) Date of publication and mention of the grant of the patent: **27.08.2014**
(21) Application number: 10756754.7
(22) Date of filing: 24.03.2010
(51) Int. Cl.: B41M 5/00, C09D 9/00, C09D 11/00

(54) **PIGMENTED INKJET INK COMPRISING A BLEED CONTROL AGENT**
PIGMENTIERTE TINTENSTRAHLTINTEN MIT EINEM FLUSSSTEUERUNGSMITTEL
ENCRE PIGMENTÉE POUR JET D'ENCRE COMPRENANT UN AGENT DE CONTRÔLE DES DÉGORGEMENTS

(30) Priority: 24.03.2009 US 162804 P
(43) Date of publication of application: 01.02.2012
(73) Proprietor: E. I. du Pont de Nemours and Company, Wilmington, DE 19898 (US)
(72) Inventor: VALENTINI, Jose, E., West Chester Pennsylvania 19382 (US); MORRIS, Gregory, Paul, Horsham Pennsylvania 19044 (US)
(74) Representative: Matthews, Derek Peter
(86) International application number: PCT/US2010/028418
(87) International publication number: WO 2010/111336

(56) References cited:
- EP-A2- 0 767 224
- EP-A2- 0 867 485
- US-A- 2 868 741
- US-A- 5 133 803
- US-A- 5 133 803
- US-A- 5 713 989
- US-A1- 2008 011 189
- US-A1- 2008 011 189
- CABOT: 'Aqueous Dispersed Pigments for Single Pass, High Speed Commercial Inkjet Printing' CAB-O-JET INKJET COLOARANTS, CABOT CORP., [Online] November 2008, page 22, 24, XP055104011 Retrieved from the Internet: <URL:http://www.cabot-corp.com/wcm/download /en-us/ij/Pigments-%20single%20pass-%20high %20speed%20commercial3.pdf>

## Description

### BACKGROUND OF THE INVENTION

This invention pertains to an aqueous inkjet ink, in particular to an aqueous inkjet ink comprising an aqueous vehicle, a self-dispersing pigment and a bleed control agent.

Inkjet printing is a non-impact printing process in which droplets of ink are deposited on a substrate, such as paper, to form the desired image. Inkjet printers are equipped with an ink set which, for full color printing, typically comprises a cyan, magenta and yellow ink (CMY). An ink set also commonly comprises a black ink (CMYK).

Bleed of one color into another is a typical problem in ink jet printing because inks have relatively low viscosity and tend to spread especially for inkjet printers having capability of printing three or four primary colors in a simultaneous (or near simultaneous) fashion. Such bleed of one printing liquid into an adjacent printing liquid results in production of indistinct images with a poor degree of resolution.

Various methods have been proposed to prevent bleed of adjacent printing liquids. One method is to apply the two printing liquids at a distance from one another so that no intermingling or mixing of the printing liquids can occur. However, this method produces images of poor resolution. Another method involves a delay in applying the second printing liquid until the first printing liquid is completely dry. This method is disadvantageous due to its inefficiencies. Yet another approach to control bleed is to increase the rate of penetration of the printing liquid into the substrate, but this causes a reduction of optical density.

U.S. Patent No. 5,488,402 discloses a method for preventing color bleed between two different color ink compositions wherein the first ink is anionic and comprises a coloring agent which includes one or more carboxyl and/or carboxylate groups, and the second ink includes a precipitating agent which is designed to ionically crosslink with the coloring agent in the first ink to form a solid precipitate in order to prevent bleed between the two ink compositions. Multivalent metal salts are disclosed as being useful as the precipitating agent.

U.S. Patent No. 7,235,126 discloses an inkjet ink containing a nonionic polymer additive. U.S. Patent No. 5,977,209 discloses ink composition comprises an alginate salt. However, neither of these two patents discloses the use of an alginate salt in self-dispersing pigments.

While the use of inorganic or organic salts in one or more inks of an ink set has provided improved bleed property in inkjet printing, a need still exists for improved inkjet ink formulations that provide good print quality without the drawbacks such as ink instability and corrosion to printhead as a result of having high concentration of salts in inks. The present invention satisfies this need by providing compositions having improved bleed property and good optical density.

### SUMMARY OF THE INVENTION

The subject-matter of the present invention is defined in claims 1-8.

An embodiment of the invention provides an inkjet ink according to claim 1 comprising an aqueous vehicle, a self-dispersing pigment, and a biopolymer as a bleed control agent, wherein said biopolymer is comprised of guluronic acid and mannuronic acid building blocks.

The biopolymer is an anionic polymer having a number average molecular weight in the range of from 25,000 to 250,000.

The amount of biopolymer is in the range of from 0.1 % to 5.0 % by weight based on the total weight of ink.

Another embodiment provides that the amount of biopolymer is 0.20 % by weight based on the total weight of ink.

Another embodiment provides that the amount of biopolymer is 0.40 % by weight based on the total weight of ink.

Another embodiment provides that the amount of biopolymer is 0.50 % by weight based on the total weight of ink.

The self-dispersing pigment is a self-dispersing carbon black pigment comprising anionic hydrophilic moieties.

Another embodiment provides that the anionic hydrophilic moieties on the self-dispersing carbon black pigment are primarily carboxyl groups directly attached to the pigment surface.

Another embodiment provides that the inkjet ink has a surface tension in the range of 20 dyne/cm to 70 dyne/cm at 25°C, and a viscosity of lower than about 30 cP at 25 °C.

Another embodiment provides an inkjet ink set according to claim 5 comprising a magenta, a yellow, a cyan, and a black ink comprising an aqueous vehicle, a self-dispersing pigment colorant and a biopolymer as a bleed control agent, wherein the biopolymer is comprised of guluronic acid and mannuronic acid building blocks.

Another embodiment provides that the magenta, yellow and cyan inks each comprises an independently selected dye colorant.

These and other features and advantages of the present invention will be more readily understood by those of ordinary skill in the art from a reading of the following Detailed Description. Certain features of the invention which are, for clarity, described above and below as separate embodiments, may also be provided in combination in a single embodiment. Conversely, various features of the invention that are described in the context of a single embodiment, may also be provided separately or in any subcombination.

### DETAILED DESCRIPTION

Unless otherwise stated or defined, all technical and scientific terms used herein have commonly understood meanings by one of ordinary skill in the art to which this invention pertains.

Unless stated otherwise, all percentages, parts, ratios, etc., are by weight.

When an amount, concentration, or other value or parameter is given as either a range, preferred range or a list of upper preferable values and lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range.

When the term "about" is used in describing a value or an end-point of a range, the disclosure should be understood to include the specific value or end-point referred to.

As used herein, reference to enhanced or improved "print quality" means some aspect of optical density, gloss, and Distinctness of Image (DOI) of the printed images and fastness (resistance to ink removal from the printed image) is increased, including, for example, rub fastness (finger rub), water fastness (water drop) and smear fastness (highlighter pen stroke).

As used herein, the term "SDP" means a "self-dispersible" or "self-dispersing" pigment.

As used herein, the term "dispersion" means a two phase system wherein one phase consists of finely divided particles (often in a colloidal size range) distributed throughout a bulk substance, the particles being the dispersed or internal phase and the bulk substance being the continuous or external phase.

As used herein, the term "dispersant" means a surface active agent added to a suspending medium to promote uniform and maximum separation of extremely fine solid particles often of colloidal sizes. For pigments, the dispersants are most often polymeric dispersants, and the dispersants and pigments are usually combined using a dispersing equipment.

As used herein, the term "OD" means optical density.

As used herein, the term "Gloss" means observation of reflected light from a printed surface, normally the printed substrate is glossy paper

As used herein, the term "degree of functionalization" refers to the amount of hydrophilic groups present on the surface of the SDP per unit surface area, measured in accordance with the method described further herein.

As used herein, the term "aqueous vehicle" refers to water or a mixture of water and at least one water-soluble, or partially water-soluble (i.e., methyl ethyl ketone), organic solvent (co-solvent).

As used herein, the term "substantially" means being of considerable degree, almost all.

As used herein, the term "dyne/cm" means dyne per centimetre, a surface tension unit.

As used herein, the term "cP" means centipoise, a viscosity unit.

As used herein, the term "mPa.s" means millipascal second, a viscosity unit.

As used herein, the term "mN.m⁻¹" means milliNewtons per meter, a surface tension unit.

As used herein, the term "EDTA" means ethylenediaminetetraacetic acid.

As used herein, the term "IDA" means iminodiacetic acid.

As used herein, the term "EDDHA" means ethylenediamine-di(o-hydroxyphenylacetic acid).

As used herein, the term "NTA" means nitrilotriacetic acid.

As used herein, the term "DHEG" means dihydroxyethylglycine.

As used herein, the term "CyDTA" means trans-1,2- cyclohexanediaminetetraacetic acid.

As used herein, the term "DTPA" means diethylenetriamine-N,N,N',N",N"-pentaacetic acid.

As used herein, the term "GEDTA" means glycoletherdiamine-N,N,N',N'-tetraacetic acid.

As used herein, Surfynol® 465 is a surfactant from Air Products (Allentown, PA, U.S.A.).

As used herein, Glycereth 26 is the polyethylene glycol ether of Glycerin with an average ethoxylation value of 26.

As used herein, Aquazol 50 is a polymer of 2-ethyloxazoline.

As used herein, the term "RMSD" refers to root mean square deviation.

As used herein, the term "jetability" means good jetting properties with no clogging or deflection during printing.

Unless otherwise noted, the above chemicals were obtained from Aldrich (Milwaukee, WI, U.S.A.) or other similar suppliers of laboratory chemicals.

The materials, methods, and examples herein are illustrative only except as explicitly stated, and are not intended to be limiting.

### Vehicle

Selection of a suitable aqueous vehicle mixture depends on requirements of the specific application, such as the desired surface tension and viscosity, the selected colorant, drying time of the ink, and the type of substrate onto which the ink will be printed. Representative examples of water-soluble organic solvents which may be utilized in the present invention are those that are disclosed in U.S. Patent No. 5,085,698.

If a mixture of water and a water-soluble solvent is used, the aqueous vehicle typically will contain about 30 % to about 95 % of water with the remaining balance (i.e., about 70 % to about 5 %) being the water-soluble solvent. Compositions of the present invention may contain about 60 % to about 95 % water, based on the total weight of the aqueous vehicle.

The amount of aqueous vehicle in the ink is typically in the range of about 70 % to about 99.8 %; specifically about 80 % to about 99.8 %, based on total weight of the ink.

The aqueous vehicle can be made to be fast penetrating (rapid drying) by including surfactants or penetrating agents such as glycol ether(s) or 1,2-alkanediols. Suitable surfactants include ethoxylated acetylene diols (e.g., Surfynols® series from Air Products), ethoxylated primary (e.g., Neodol® series from Shell) and secondary (e.g., Tergitol® series from Union Carbide) alcohols, sulfosuccinates (e.g., Aerosol® series from Cytec), organosilicones (e.g., Silwet® series from Witco) and fluoro surfactants (e.g., Zonyl® series from DuPont).

The amount of glycol ether(s) or 1,2-alkanediol(s) added must be properly determined, but is typically in a range of from about 1 % to about 15 % by weight, and more typically about 2 % to about 10 % by weight, based on the total weight of the ink. Surfactants may be used, typically in an amount of from about 0.01 % to about 5%, and specifically from about 0.2 % to about 2 %, based on the total weight of the ink.

### Colorant

The colorant of the present invention is a self-dispersing (or self-dispersible) carbon black pigment comprising amionic hydrophilic moieties. The term self-dispersing pigment (or "SDP") refers to pigment particles whose surface has been chemically modified with hydrophilic, dispersibility-imparting groups that allow the pigment to be stably dispersed in an aqueous vehicle without a separate dispersant. "Stably dispersed" means that the pigment is finely divided, uniformly distributed and resistant to particle growth and flocculation.

The SDPs may be prepared by grafting a functional group or a molecule containing a functional group onto the surface of the pigment, by physical treatment (such as vacuum plasma), or by chemical treatment (for example, oxidation with ozone, hypochlorous acid or the like). A single type or a plurality of types of hydrophilic functional groups may be bonded to one pigment particle. The hydrophilic groups are carboxylate or sulfonate groups which provide the SDP with a negative charge when dispersed in aqueous vehicle. The carboxylate or sulfonate groups are usually associated with monovalent and/or divalent cationic counter-ions. Methods of making SDPs are well known and can be found, for example, in US5554739 and US6852156.

The SDPs of the present invention may have a degree of functionalization wherein the density of anionic groups is less than about 3.5 µmoles per square meter of pigment surface (3.5 µmol/m²), and more specifically, less than about 3.0 µmol/m². Degrees of functionalization of less than about 1.8 µmol/m², and more specifically, less than about 1.5 µmol/m², are also suitable and may be preferred for certain specific types of SDPs.

The range of useful particle size after dispersion is typically from about 0.005 um to about 15 um. Typically, the pigment particle size should range from about 0.005 um to about 5 um; and, specifically, from about 0.005 um to about 1 um. The average particle size as measured by dynamic light scattering is less than about 500 nm, typically less than about 300 nm.

The amount of colorant present in the ink is typically in the range of from about 0.1 % to about 10 % by weight, and more typically in the range of from about 0.5 % to about 8 % by weight, based on the total weight of ink.

### Bleed Control Agent and Other Additives

The biopolymer bleed control agent is comprised of homopolymer blocks of 1,4-linked D-mannuronic (M) and its C-5 epimer of L-guluronic (G) residues. These homopolymers are covalently linked in different sequences or blocks as shown in Formula I. 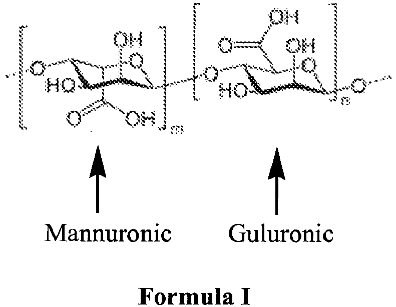 Commercial varieties of these biopolymers are obtained from seaweed including *Macrocystis, Ascophylulum* and *Laminaria.* Different processes have been described in literature to produce biopolymers from seaweed. The original process developed by Standford consists of maceration of seaweed with 10 % aqueous calcium carbonate to disintegrate the seaweed into a gelatinous mass, followed by filtration and acid treatment to separate the water insoluble acidic polymer product. This polymer can be neutralized with sodium hydroxide, potassium hydroxide, or ammonium hydroxide to convert to the corresponding water soluble salts. Propylene oxide esters of these acidic polymers are also water soluble. Typical commercial sodium salts or esters used in the instant invention have an average molecular weight in the range of between 32,000 and 220,000. The concentration of guluronic residues in the biopolymer should be greater than 50 % to provide effective control of bleed.

The biopolymer bleed control agent will be included in the ink in an effective amount to control bleed relative to the same ink without the bleed control agent. Typically, the biopolymer will be present in the ink at a level of at least about 0.2 % by weight based on the total weight of the ink. The biopolymer is present in a range of 0.1 % to 5 % based on the total weight of the ink. In another embodiment, the biopolymer is present in a range of 0.2 % to 4 % based on the total weight of the ink. The appropriate levels of bleed control agent can be readily determined by one of ordinary skill in the art through routine experimentation. The biopolymer is available commercially, for example, from FMC Corporation, Philadelphia, PA, U.S.A.

Other ingredients, additives, may be formulated into the inkjet ink, to the extent that such other ingredients do not interfere with the stability and jetability of the inkjet ink. This may be readily determined by routine experimentation by one skilled in the art.

Surfactants are commonly added to inks to adjust surface tension and wetting properties. Suitable surfactants include the ones disclosed in the Vehicle section above. Surfactants are typically used in amounts up to about 5 % and more typically in amounts up to 2 % by weight, based on the total weight of the ink.

Inclusion of sequestering (or chelating) agents such as ethylenediaminetetraacetic acid (EDTA), iminodiacetic acid (IDA), ethylenediamine-di(o-hydroxyphenylacetic acid) (EDDHA), nitrilotriacetic acid (NTA), dihydroxyethylglycine (DHEG), trans-1,2-cyclohexanediaminetetraacetic acid (CyDTA), diethylenetriamine-N,N,N',N",N"-pentaacetic acid (DTPA), and glycoletherdiamine-N,N,N',N'-tetraacetic acid (GEDTA), and salts thereof, may be advantageous, for example, to eliminate deleterious effects of heavy metal impurities.

Polymers may be added to the ink to improve durability or other properties. The polymers can be soluble in the vehicle or in a dispersed form, and can be ionic or nonionic. Soluble polymers include linear homopolymers and copolymers or block polymers. They also can be structured polymers including graft or branched polymers, stars and dendrimers. The dispersed polymers may include, for example, latexes and hydrosols. The polymers may be made by any known process including, but not limited to, free radical, group transfer, ionic, condensation and other types of polymerization. They may be made by a solution, emulsion, or suspension polymerization process. Typical classes of polymer additives include anionic acrylic, styrene-acrylic and polyurethane polymer.

When a polymer is present, its level is typically between about 0.01 % and about 3 % by weight, based on the total weight of an ink. The upper limit is dictated by ink viscosity or other physical limitations.

### Ink Sets

The term "ink set" refers to all the individual inks or other fluids an inkjet printer is equipped to jet. Ink sets typically comprise at least three differently colored inks. For example, a cyan (C), magenta (M) and yellow (Y) ink forms a CMY ink set. More typically, an ink set includes at least four differently colored inks, for example, by adding a black (K) ink to the CMY ink set to form a CMYK ink set. The magenta, yellow and cyan inks of the ink set are typically aqueous inks, and may contain dyes, pigments or combinations thereof as the colorant. Such other inks are, in a general sense, well known to those of ordinary skill in the art.

In addition to the typical CMYK inks, an ink set may further comprise one or more "gamut-expanding" inks, including differently colored inks such as an orange ink, a green ink, a red ink and/or a blue ink, and combinations of full strength and light strength inks such as light cyan and light magenta. Such other inks are, in a general sense, known to one skilled in the art.

A typical ink set comprises a magenta, yellow, cyan and black ink, wherein the black ink is an ink according to the present invention comprising an aqueous vehicle, a self-dispersing carbon black pigment. Specifically, the colorant in each of the magenta, yellow and cyan inks is a dye.

### Ink Properties

Jet velocity, separation length of the droplets, drop size and stream stability are greatly affected by the surface tension and the viscosity of the ink. Pigmented ink jet inks typically have a surface tension in the range of about 20 dyne/cm to about 70 dyne/cm at 25 °C. Viscosity can be as high as 30 cP at 25 °C, but is typically somewhat lower. The ink has physical properties compatible with a wide range of ejecting conditions, i.e., driving frequency of the piezo element or ejection conditions for a thermal head for either a drop-on-demand device or a continuous device, and the shape and size of the nozzle. The inks should have excellent storage stability for long periods so as not to clog to a significant extent in an ink jet apparatus. Furthermore, the ink should not corrode parts of the ink jet printing device it comes in contact with, and it should be essentially odorless and non-toxic.

Although not restricted to any particular viscosity range or printhead, the inventive ink set is particularly suited to lower viscosity applications such as those required by thermal printheads. Thus the viscosity of the inventive inks at 25 °C can be less than about 7 cP, typically less than about 5 cP, and more typically than about 3.5 cP. Thermal inkjet actuators rely on instantaneous heating/bubble formation to eject ink drops and this mechanism of drop formation generally requires inks of lower viscosity.

### Substrate

The instant invention is particularly advantageous for printing on plain paper, such as common electrophotographic copier paper and photo paper, glossy paper and similar papers used in inkjet printers.

### EXAMPLES

Inks were prepared by stirring the indicated ingredients together and filtering the resulting mixture. The water used in the following Examples was deionized unless otherwise stated.

### Dispersion 1

Carbon black (S-160 from Degussa) was oxidized with ozone according to the process described in U.S. Patent No. 6,852,156 to create carboxylic acid groups directly attached to the carbon black pigment surface. Potassium hydroxide was used to neutralize the treated pigment and convert the surface acid groups to the potassium salt form. The neutralized mixture was purified by an ultra-filtration to remove free acids, salts, and contaminants. It was further purified by washing repeatedly with de-ionized water until the conductivity of the mixture leveled off and remained relatively constant. After recovery, Dispersion 1 was a 20.5 % by weight dispersion of self-dispersing carbon black pigment.

### Dispersion 2

An aqueous premix of carbon black (Nipex® 180 from Evonik Degussa, Frankfurt, DE) and potassium neutralized dispersant diblock copolymer 4//30/6 MAA//BzMA/MAA (MAA = methacrylic acid; BzMA = benzylmethacrylic acid) in a weight ratio of 2.5:1 was milled in a bead mill using 0.5 mm YTZ^{®} grinding media. The milled dispersion was filtered through a 0.3 micron Pall filter to separate the media and remove large particles. The recovered dispersion was diluted with water to yield a final dispersion of about 15 % by weight of carbon black pigment.

### Paper

The papers used were Cannon GF500 (from Canon, Inc) and Business 4200 (from Xerox Corporation). They are referred to as "Canon GF500" and "Xerox 4200", respectively.

### Optical Density

Inks were printed with a Canon PIXMA 4200 printer onto the above indicated papers. The coverage that an inkjet printer puts down on a substrate is usually controlled by the printer software and can be set in the printer settings. Printing was done in the selected standard print mode that targets 100 % coverage. This setting for 100 % coverage means that the inkjet printer is to fire enough droplets/dots to cover at least 100 % of the area being printed. This usually results in dots spreading and partially overlapping with each other. The reported optical density (OD) values for areas printed at 100 % coverage were measured with a Greytag Macbeth Spectrolino spectrometer manufactured by Greytag-Macbeth AG, Regensdorf, Switzerland.

### Evaluation of Bleed

Three test patterns were made on the same sheet of paper. In the first pattern, a solid horizontal black line about 400 microns wide was made on a white paper without any abutting color (referred to as black on white and abbreviated as K/W). In the second pattern, a similar horizontal black line abuts, on both the upper and lower edges, a solid block of yellow color (referred to as black on yellow and abbreviated as K/Y). In the third pattern, a horizontal black line similar that in the first two patterns abuts, on both the upper and lower edges, a solid block of red (yellow plus magenta) color (referred to as black on red and abbreviated as K/R).

The edge acuity of the black line in each of the three patterns was then assessed by image analysis under a microscope. A monochrome camera coupled to a microscope captured a digital photomicrograph of the line. The borders of the upper and lower edges were determined by analysis of the threshold reflectivity values. The points in each border were used to calculate a straight line representing the least squares best fit of the line edge. For each edge, the root mean square deviation (RMSD) of the points in the border was calculated (in units of microns, µ) relative to the least squares best fit straight line. Sufficient quantity and location of points were sampled on a given sheet to ensure that the analysis of line edges was statistically significant. RMSD relates to the perception of line edge acuity. A line with a small RMSD appears sharp upon visual inspection, whereas a line with a large RMSD appears "fuzzy" or "ragged". This method objectively quantitates the relative sharpness (or raggedness) of a line printed under different conditions.

The unevenness of the K/W line edge (RMSD K/W) is referred to a "feathering" as there is no abutting color. The unevenness of the K/Y line edge (RMSD K/Y) or K/R line edge (RMSD K/R) is a combination of feathering and "bleed" of the black into the yellow or red. Thus "bleed", as referred to herein, is quantitated for the K/Y line as RMSD K/Y minus RMSD K/W, and for the K/R line as RMSD K/R minus RMSD K/W. An increase in bleed is the increase in RMSD of K/Y or K/R over the RMSD of K/W.

The test patterns were printed with a Canon PIXMA 4200 printer. The black inks used to make the horizontal line are described in the Examples. The yellow and magenta inks used to make the yellow and red blocks of color were Canon CLi-8Y and Cli-8M commercial inks made for the PIXMA 4200 printer.

The RMSD may vary greatly from one brand of paper to another. Sometimes, there is substantial variation even within the same brand from one ream of paper to another. Day to day environmental variation (e.g., temperature, humidity) can also cause variability. To minimize such variability, all tests in a given series are run on the same day with paper from the same ream and the results are averaged from five test patterns on five different sheets of paper.

### Example 1

Inks 1A-1E were prepared using the ingredients listed in Table 1A below. Ink 1A is a control ink without the presence of any bleed control agent. Ink 1B contains 0.1 % of a water soluble polymer Aquazol 50. Inks 1C-1E contain various amounts of the biopolymer bleed control agent comprising of guluronic acid and mannuronic acid in various ratios.

**Table 1A**

| **Ingredients** | **Ink 1A** (control) | **Ink 1B** (comparative) | **Ink 1C** | **Ink 1D** | **Ink 1E** |
|---|---|---|---|---|---|
| Dispersion 1*(SDP) | 3.3 | 3.3 | 3.3 | 3.3 | 3.3 |
| 1,3-Propanediol* | 11.0 | 6.0 | 6.0 | 8 | 6 |
| Glycereth 26* | 3.0 | 1.0 | 1.0 | 2 | 1 |
| Aquazol 50* (MW 50000) | | 0.1 | | | |
| Guluronic/Mannuronic* (MW 216000) | | | 0.1 | | |
| Guluronic/Mannuronic* (MW 71000) | | | | 0.2 | |
| Guluronic/Mannuronic* (MW 31000) | | | | | 0.5 |
| Surfynol® 465* | 0.25 | 0.20 | 0.20 | 0.18 | 0.181 |
| DI Water | Balance to 100 % | Balance to 100 % | Balance to 100% | Balance to 100% | Balance to 100 % |

| **Physical Properties** | | | | | |
|---|---|---|---|---|---|
| Viscosity (mPa.s) | 2.06 | 1.77 | 3.91 | 4.84 | 3.82 |
| pH | 7.29 | 7.02 | 7.11 | 7.34 | 7.23 |
| Surface Tension (mN.m⁻¹) | 39.61 | 41.11 | 39.00 | 40.47 | 39.81 |

| | | | | | |
|---|---|---|---|---|---|
| * as % by weight based on total weight of ink | | | | | |

As shown in the Table 1B below, addition of a common water soluble polymer to an ink containing SDP (Ink 1B) resulted in a significant increase of bleed (larger K/Y and K/R bleed values) as compared to the same ink without the polymer (Ink 1A). Additions of the inventive biopolymer additive (Inks 1C-1E) resulted in substantial reductions of bleed (smaller K/Y and K/R bleed values) without causing any optical density loss. Consistent results were obtained on both Canon and Xerox printers.

**Table 1B**

| **Print Properties on Canon GF500** | **Ink 1A** (control) | **Ink 1B** (comparative) | **Ink 1C** | **Ink 1D** | **Ink 1E** |
|---|---|---|---|---|---|
| Bleed K/Y (µm) | 167 | 312 | 66 | 104 | 34 |
| Bleed K/R (µm) | 155 | 129 | 99 | 123 | 77 |
| Optical Density | 1.52 | 1.30 | 1.51 | 1.49 | 1.49 |
| **Print Properties on Xerox 4200** | | | | | |
| Bleed K/Y (µm) | 68 | 200 | 33 | 61 | 29 |
| Bleed K/R (µm) | 83 | 217 | 52 | 71 | 47 |
| Optical Density | 1.45 | 1.07 | 1.47 | 1.48 | 1.48 |

### Example 2

Inks 2A-2C were prepared using the ingredients listed in Table 2A. Inks 2A-2B were made using Dispersion 2, a dispersion that contains a polymeric dispersant. Ink 2C was made using Dispersion 1, a dispersion that contains a self-dispersing carbon black pigment. Ink 2A is a control ink without the inventive bleed control agent. Ink 2C is similar to Ink 1C except that the amount of the biopolymer present is 0.4 %.

**Table 2A**

| **Ingredient** | **Ink 2A** (comparative) | **Ink 2B** (comparative) | **Ink 2C** |
|---|---|---|---|
| Dispersion 2* (Polymeric) | 3.3 | 3.3 | |
| Dispersion 1* (SDP) | | | 3.3 |
| 1,3-Propanediol* | 11 | 6.0 | 6.0 |
| Glycereth 26* | 3 | 1.0 | 1.0 |
| Guluronic/Mannuronic* (MW 216000) | | 0.4 | 0.4 |
| Surfynol® 465* | 0.308 | 0.290 | 0.198 |
| DI Water | Balance to 100 % | Balance to 100 % | Balance to 100 % |

| **Physical Properties** | | | |
|---|---|---|---|
| Viscosity (mPa.s) | 2.20 | 3.28 | 3.60 |
| pH | 8.58 | 8.44 | 7.23 |
| Surface Tension (mN.m⁻¹) | 41.18 | 40.69 | 39.00 |

| | | | |
|---|---|---|---|
| * as % by weight based on total weight of ink | | | |

As shown in the Table 2B below, addition of the biopolymer to an ink containing a polymeric dispersant (Ink 2B) resulted in modest bleed control as compared to the same ink without the biopolymer additive (Ink 2A). Addition of the biopolymer to an ink containing a self-dispersing pigment (Ink 2C) resulted in both significant bleed control and improved optical density over the ink containing a non-self-dispersing pigment (Ink 2A). Consistent results were obtained on both Canon and Xerox printers.

**Table 2B**

| **Print Properties on Canon GF500** | **Ink 2A** (comparative) | **Ink 2B** (comparative) | **Ink 2C** |
|---|---|---|---|
| Bleed K/Y (µm) | 247 | 83 | 50 |
| Bleed K/R (µm) | 239 | 157 | 87 |
| Optical Density | 1.26 | 1.15 | 1.52 |
| **Print Properties on Xerox 4200** | | | |
| Bleed K/Y (µm) | 211 | 66 | 30 |
| Bleed K/R (µm) | 207 | 188 | 54 |
| Optical Density | 0.98 | 0.99 | 1.46 |

## Claims

1. An inkjet ink comprising an aqueous vehicle, a self-dispersing carbon black pigment comprising anionic hydrophilic moieties, and a biopolymer as a bleed control agent, wherein said biopolymer is an anionic polymer having a number average molecular weight in the range of from 25,000 to 250,000 and is comprised of guluronic acid and mannuronic acid building blocks, and wherein the amount of said biopolymer is in the range of from 0.1 % to 5.0 % by weight based on the total weight of ink.

2. The inkjet ink of claim 1, wherein the anionic hydrophilic moieties on the self-dispersing carbon black pigment are primarily carboxyl groups directly attached to the pigment surface.

3. The inkjet ink of claim 1, having a surface tension in the range of 20 dyne/cm to 70 dyne/cm at 25°C, and a viscosity of lower than about 30 cP at 25 °C.

4. The inkjet ink of claim 1, wherein the amount of biopolymer is in the range of 0.2 % to 4.0 % by weight based on the total weight of ink.

5. An inkjet ink set comprising a magenta, a yellow, a cyan, and a black ink comprising an aqueous vehicle, a self-dispersing carbon black pigment comprising anionic hydrophilic moieties, and a biopolymer as a bleed control agent, wherein said biopolymer is an anionic polymer having a number average molecular weight in the range of from 25,000 to 250,000 and is comprised of guluronic acid and mannuronic acid building blocks, and wherein the amount of said biopolymer is in the range of from 0.1 % to 5.0 % by weight based on the total weight of ink.

6. The inkjet ink set of claim 5, wherein the magenta, yellow and cyan inks each comprise an independently selected dye colorant.

7. The inkjet ink set of claim 5, wherein the anionic hydrophilic moieties on the self-dispersing carbon black pigment are primarily carboxyl groups directly attached to the pigment surface.

8. The inkjet ink set of claim 5, wherein the amount of biopolymer is in the range of 0.2 % to 4.0 % by weight based on the total weight of ink.

## Patentansprüche

1. Tintenstrahltinte umfassend ein wässriges Vehikel, ein selbstdispergierendes Rußpigment, das anionische hydrophile Anteile umfasst, und ein Biopolymer als Ausblutungskontrollmittel, wobei das Biopolymer ein anionisches Polymer ist, das ein zahlendurchschnittliches Molekulargewicht im Bereich von 25.000 bis 250.000 aufweist und aus Guluronsäure- und Mannuronsäure-Bausteinen besteht, und wobei die Menge des Biopolymers im Bereich von 0,1 bis 5,0 Gew.-%, auf das Gesamtgewicht der Tinte bezogen, liegt.

2. Tintenstrahltinte nach Anspruch 1, wobei die anionischen hydrophilen Anteile des selbstdispergierenden Rußpigments hauptsächlich Carboxylgruppen sind, die direkt an die Pigmentoberfläche angeheftet sind.

3. Tintenstrahltinte nach Anspruch 1, die eine Oberflächenspannung im Bereich von 20 Dyn/cm bis 70 Dyn/cm bei 25 °C und eine Viskosität von weniger als etwa 30 cP bei 25 °C aufweist.

4. Tintenstrahltinte nach Anspruch 1, wobei die Menge an Biopolymer im Bereich von 0,2 bis 4,0 Gew.-%, auf das Gesamtgewicht der Tinte bezogen, liegt.

5. Tintenstrahltintensatz umfassend eine magentafarbene, eine gelbe, eine cyanfarbene und eine schwarze Tinte, umfassend ein wässriges Vehikel, ein selbstdispergierendes Rußpigment, das anionische hydrophile Anteile umfasst, und ein Biopolymer als Ausblutungskontrollmittel, wobei das Biopolymer ein anionisches Polymer ist, das ein zahlendurchschnittliches Molekulargewicht im Bereich von 25.000 bis 250.000 aufweist und aus Guluronsäure- und Mannuronsäure-Bausteinen besteht, und wobei die Menge des Biopolymers im Bereich von 0,1 bis 5,0 Gew.-%, auf das Gesamtgewicht der Tinte bezogen, liegt.

6. Tintenstrahltintensatz nach Anspruch 5, wobei die magentafarbenen, gelben und cyanfarbenen Tinten jeweils einen unabhängig ausgewählten Farbstoff umfassen.

7. Tintenstrahltintensatz nach Anspruch 5, wobei die anionischen hydrophilen Anteile am selbstdispergierenden Rußpigment hauptsächlich Carboxylgruppen sind, die direkt an die Pigmentoberfläche angeheftet sind.

8. Tintenstrahltintensatz nach Anspruch 5, wobei die Menge an Biopolymer im Bereich von 0,2 bis 4,0 Gew.-%, auf das Gesamtgewicht der Tinte bezogen, liegt.

## Revendications

1. Encre pour jet d'encre comprenant un véhicule aqueux, un pigment autodispersant à base de noir de carbone comprenant des fractions hydrophiles anioniques, et un biopolymère comme agent de contrôle du dégorgement, dans laquelle ledit biopolymère est un polymère anionique ayant un poids moléculaire moyen en nombre situé dans la plage de 25000 à 250000 et qui est composé de blocs de construction acide guluronique et acide mannuronique, et dans laquelle la quantité dudit biopolymère se situe dans la plage de 0,1 % à 5,0 % en poids sur la base du poids total de l'encre.

2. Encre pour jet d'encre selon la revendication 1, dans laquelle les fractions hydrophiles anioniques sur le pigment autodispersant à base de noir de carbone sont principalement des groupes carboxyle directement fixés à la surface du pigment.

3. Encre pour jet d'encre selon la revendication 1, ayant une tension superficielle située dans la plage de 20 dynes/cm jusqu'à 70 dynes/cm à 25°C, et une viscosité inférieure à environ 30 cP à 25°C.

4. Encre pour jet d'encre selon la revendication 1, dans laquelle la quantité de biopolymère se situe dans la plage de 0,2 % à 4,0 % en poids sur la base du poids total de l'encre.

5. Jeu d'encres pour jet d'encre comprenant une encre magenta, une encre jaune, une encre cyan, et une encre noir comprenant un véhicule aqueux, un pigment autodispersant à base de noir de carbone comprenant des fractions hydrophiles anioniques, et un biopolymère comme agent de contrôle du dégorgement, dans lequel ledit biopolymère est un polymère anionique ayant un poids moléculaire moyen en nombre situé dans la plage de 25000 à 250000 et qui est composé de blocs de construction acide guluronique et acide mannuronique, et dans lequel la quantité dudit biopolymère se situe dans la plage de 0,1 % à 5,0 % en poids sur la base du poids total de l'encre.

6. Jeu d'encres pour jet d'encre selon la revendication 5, dans lequel les encres magenta, jaune et cyan comprennent chacune un colorant sélectionné indépendamment.

7. Jeu d'encres pour jet d'encre selon la revendication 5, dans lequel les fractions hydrophiles anioniques sur le pigment autodispersant à base de noir de carbone sont principalement des groupes carboxyle directement fixés à la surface du pigment.

8. Jeu d'encres pour jet d'encre selon la revendication 5, dans lequel la quantité de biopolymère se situe dans la plage de 0,2 % à 4,0 % en poids sur la base du poids total de l'encre.
